# EUROPÄISCHE PATENTSCHRIFT

(11) **EP 3 364 517 B1**
(45) Veröffentlichungstag und Bekanntmachung des Hinweises auf die Patenterteilung: **17.11.2021**
(21) Anmeldenummer: 18157183.7
(22) Anmeldetag: 16.02.2018
(51) Int. Cl.: H02J 7/35

(54) **VERFAHREN ZUR SICHERSTELLUNG DER VERFÜGBARKEIT AUSREICHENDER ENERGIERESERVEN IN EINEM INTELLIGENTEN GERÄT**
METHOD FOR ENSURING THE AVAILABILITY OF ADEQUATE ENERGY RESERVES IN AN INTELLIGENT APPARATUS
PROCÉDÉ PERMETTANT D'ASSURER LA DISPONIBILITÉ DE RÉSERVE D'ÉNERGIE SUFFISANTE DANS UN APPAREIL INTELLIGENT

(30) Priorität: 17.02.2017 DE 102017103260
(43) Veröffentlichungstag der Anmeldung: 22.08.2018
(73) Patentinhaber: ABB Schweiz AG, 5400 Baden (CH)
(72) Erfinder: Kaul, Holger, 68165 Mannheim (DE); Mendoza, Francisco, 76131 Karlsruhe (DE); Sosale, Guruprasad, 69469 Weinheim (DE); Gebhardt, Jörg, 55130 Mainz (DE); Kruse, Jörn, 68239 Mannheim (DE); Ahrend, Ulf, 76185 Karlsruhe (DE); Rodenbusch-Mohr, Thomas, 68161 Mannheim (DE)
(74) Vertreter: Wesch, Arno

(56) Entgegenhaltungen:
- WO-A1-01/48723
- WO-A1-96/18178
- WO-A1-2016/022646
- GB-A- 2 507 344
- US-A1- 2002 043 969
- US-A1- 2011 196 547
- US-A1- 2015 373 022
- US-A1- 2017 008 162

## Beschreibung

Die Erfindung betrifft ein Verfahren zur Sicherstellung der Verfügbarkeit ausreichender Energiereserven in einem intelligenten Gerät zur Ausführung eines von einem entfernten Benutzer bei dem Gerät angefragten Dienstes, wobei das Gerät eine Vorrichtung zur Energiegewinnung aus der Umgebung des Gerätes hat und einen mit der Vorrichtung verbundenen wiederaufladbaren Energiespeicher, gemäß dem Oberbegriff von Anspruch 1.

Ein Verfahren mit diesen Merkmalen ist aus der WO 2016/022646 A1 mit Bezug auf ein als Flugzeug gestaltetes Gerät bekannt.

Ein Beispiel für ein intelligentes Gerät ist ein sogenannter intelligenter Sensor mit Energy-Harvester, wie er im Bereich der Gebäudeautomatisierung Verwendung findet. Ein intelligenter Sensor hat ein oder mehrere Sensorelemente zur Erfassung von physikalischen und/oder chemischen Größen, die im Zusammenhang mit der Gebäudeautomatisierung als Messgrößen und Eingangsgrößen für ein Gebäudeautomatisierungssystem interessant sein können. Dazu gehören Sensorelemente für Temperatur, Luftdruck, Feuchtigkeit, Helligkeit, Gasbestandteile, Bewegungserkennung etc. Neben dem Sensorelement hat ein intelligenter Sensor häufig einen Mikroprozessor, einen elektronischen Speicher, eine Kommunikationsschnittstelle und eine Vorrichtung zur Energieversorgung. Im Bereich der Gebäudeautomatisierung ist es vorteilhaft, wenn die Sensoren drahtlos und kabellos verwendet werden können. Dazu ist die Kommunikationsschnittstelle als eine Schnittstelle zur drahtlosen Kommunikation eingerichtet. Die Energieversorgung solcher Sensoren erfolgt vorteilhafterweise mittels eines sogenannten Energy-Harvesters, das ist eine Vorrichtung zur Energiegewinnung aus der Umgebung. Ein bekanntes Beispiel hierfür ist eine Photovoltaik-Zelle, die Licht in elektrische Energie wandelt. Damit der Sensor auch bei wenig vorhandener Umgebungsenergie arbeitet und kommunizieren kann, also im Beispiel der Photovoltaik-Zelle auch bei Dunkelheit, hat ein intelligenter Sensor häufig noch eine wiederaufladbare Batterie einer bestimmten Kapazität, die mit überschüssiger Energie aus dem Energy-Harvester geladen wird und dann bei Bedarf zur Verfügung steht, und die dann von der Sensorelektronik im Betrieb entladen wird. Ein intelligenter Sensor mit Energy-Harvester hat eine Elektronik, die nur sehr wenig Energie benötigt, eine sogenannte Low-Power-Elektronik, mit einem Energieverbrauch im Bereich einiger Mikrowatt bis ein Milliwatt. Geräte, die mit einem Energy-Harvester und einer wiederaufladbaren Batterie versorgt werden, haben heutzutage meistens eine einfache Ladezustandsanzeige, an der man erkennen kann, ob die wiederaufladbare Batterie noch ausreichend stark geladen ist, damit die Funktionen des Sensors und seine drahtlose Kommunikation störungsfrei ablaufen können.

Es ist daher die der vorliegenden Erfindung zugrunde liegende Aufgabe, ein Verfahren bereitzustellen, mittels dessen sichergestellt ist, dass in einem intelligenten Gerät der genannten Art zur Ausführung eines von einem entfernten Benutzers bei dem Gerät angefragten Dienst eine ausreichende Energiereserve vorhanden ist.

Diese Aufgabe wird gelöst durch ein Verfahren mit den Merkmalen des Anspruchs 1.

Das erfindungsgemäße Verfahren umfasst die folgenden Schritte:
a. Ermitteln von Erfahrungswerten für die Menge der zur Ausführung bestimmter Dienste in dem Gerät benötigten Energie,
b. Hinterlegen der Erfahrungswerte in dem Gerät,
c. Anfragen eines bestimmten Dienstes durch den Benutzer bei dem Gerät,
d. Ermitteln der in dem Gerät zur Ausführung von Diensten verfügbaren Energiemenge,
e. Vergleichen des Erfahrungswertes für die Menge der zur Ausführung des angefragten Dienstes benötigten Energie mit der zur Ausführung von Diensten in dem Gerät verfügbaren Energiemenge,
f. Ausführen des Dienstes wenn der Erfahrungswert für die Menge der zur Ausführung des angefragten Dienstes benötigten Energie kleiner ist als die zur Ausführung von Diensten in dem Gerät verfügbare Energiemenge,
g. Ablehnen der Ausführung des Dienstes, wenn der Erfahrungswert für die Menge der zur Ausführung des angefragten Dienstes benötigten Energie größer ist als die zur Ausführung von Diensten in dem Gerät verfügbare Energiemenge.

In einer vorteilhaften Ausführungsform ist vorgesehen, dass das Gerät einen Mikroprozessor und einen Datenspeicher hat, und dass der Energiespeicher eine wiederaufladbare Batterie ist, und dass die Erfahrungswerte im Datenspeicher hinterlegt werden.

In einer vorteilhaften Ausführungsform ist vorgesehen, dass die in der Vorrichtung zur Energiegewinnung erzeugte Energie zum Betrieb des Gerätes und zum Aufladen der wiederaufladbaren Batterie verwendet wird.

In einer vorteilhaften Ausführungsform ist vorgesehen, dass die Verlaufshistorie der in der Vorrichtung zur Energieerzeugung erzeugten Energiemenge aufgezeichnet wird und anhand der Verlaufshistorie eine Prognose für die Menge der zukünftig erzeugbaren Energiemenge erstellt wird.

In einer vorteilhaften Ausführungsform ist vorgesehen, dass die im Energiespeicher verfügbare Energiemenge anhand einer Messung der Batteriespannung oder des Batteriestromes ermittelt wird.

In einer vorteilhaften Ausführungsform ist vorgesehen, dass die in dem Gerät zur Ausführung von Diensten verfügbare Energiemenge_anhand der im Energiespeicher verfügbaren Energie und der Prognose für die zukünftig in der Vorrichtung erzeugbare Energiemenge ermittelt wird.

In einer vorteilhaften Ausführungsform ist vorgesehen, dass die Erfahrungswerte für die Menge der zur Ausführung bestimmter Dienste in dem Gerät benötigten Energie durch Modellierung der jeweiligen Dienste erhalten werden.

In einer vorteilhaften Ausführungsform ist vorgesehen, dass die Erfahrungswerte für die Menge der zur Ausführung bestimmter Dienste in dem Gerät benötigten Energie mithilfe von Lernalgorithmen anhand des Energieverbrauchs bei vorhergehenden Ausführungen der jeweiligen Dienste ermittelt werden.

In einer vorteilhaften Ausführungsform ist vorgesehen, dass das Gerät signaltechnisch mit wenigstens einer Einrichtung verbunden ist, die mit der Vorrichtung zur Energiegewinnung aus der Umgebung zusammenwirkt zu einer Steigerung der Energiegewinnung, und dass, wenn der Erfahrungswert für die Menge der zur Ausführung des angefragten Dienstes benötigten Energie größer ist als die zur Ausführung von Diensten in dem Gerät verfügbare Energiemenge, das Gerät mit der Einrichtung zusammenwirkt zu einer Steigerung der Energiegewinnung.

Die Erfindung sowie weitere Ausführungsmöglichkeiten und Vorteile der Erfindung sollen jetzt anhand der Figuren erläutert und beschrieben werden. Es zeigen
- Fig. 1: schematisch und exemplarisch einen intelligenten Sensor mit einem Energy-Harvester und einer drahtlosen Kommunikationsverbindung zu einem entfernten Benutzer,

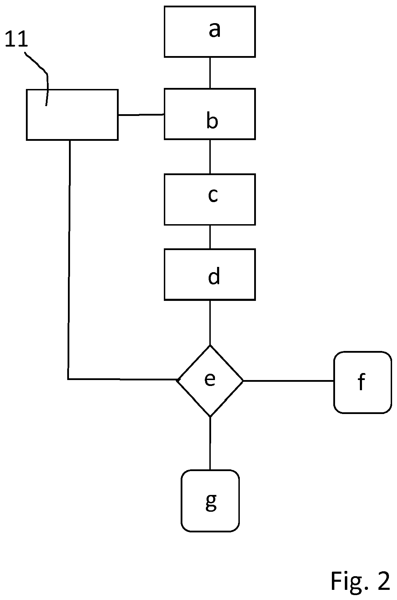

- Fig. 2: exemplarisch und beispielhaft ein Ablaufdiagramm des erfindungsgemäßen Verfahrens.

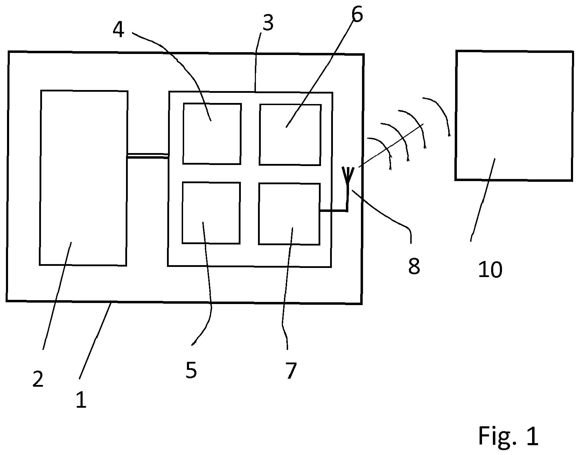

Figur 1 zeigt schematisch einen bekannten intelligenten Sensor 1, der eine Photovoltaik-Zelle 2 als Energy Harvester hat und eine Sensor-Elektronik 3. Diese umfasst eine Ladekontroll- und Regelelektronik 4, eine Mikroprozessorschaltung 5, die auch einen Speicher beinhaltet, eine wiederaufladbare Batterie 6 und einen Kommunikationsschnittelle 7 zur Realisierung einer drahtlosen und bidirektionalen Kommunikation, schematisch dargestellt durch eine Antenne 8 und schematisierte Radiowellen 9, mit einem entfernten Benutzer 10. Der Benutzer 10 kann beispielsweise ein Gateway in einem Gebäudeautomatisierungssystem sein, oder auch ein I/O-Gerät in einem Gebäudeautomatisierungssystem, oder ein mobiles Kommunikationsgerät einer Bedienperson, beispielsweise ein Smartphone oder ein Tablet, oder etwas Ähnliches oder Entsprechendes.

Die wiederaufladbare Batterie 6 fungiert gewissermaßen als Energie—Backup für den Betrieb des intelligenten Sensors mit allen seinen Funktionen, zu denen auch die drahtlose bidirektionale Kommunikation mit dem Benutzer 10 gehört. Die wiederaufladbare Batterie 6 hat eine gewisse Kapazität und wird von der Photovoltaikzelle 2 aufgeladen, gesteuert durch die Ladekontroll- und Regeleinrichtung, und entlädt sich, wenn sie die Sensorelektronik 3 mit Energie versorgen muss, also beispielsweise wenn die Photovoltaik-Zelle wegen Dunkelheit keine Energie bereitstellen kann. Auch wenn die Photovoltaik-Zelle 2 nicht genügend Energie für den Betrieb der Sensorelektronik 3 bereitstellen kann, dann wird die über die von der Photovoltaik-Zelle bereitstellbare Energie hinaus benötigte Energie der wiederaufladbaren Batterie 6 entnommen. Denn alle Funktionen, die die Sensorelektronik 3 ausführt, haben einen gewissen Energiebedarf, und es gibt Teil-Funktionen, die einen erhöhten Energiebedarf haben und mehr Energie verbrauchen als der Energy-Harvester 2 gerade bereitstellen kann. Diese zusätzlich benötigte Energie wird der wiederaufladbaren Batterie 6 entnommen.

Ein Beispiel für eine Funktion mit erhöhtem Energiebedarf ist ein drahtlos erfolgender Firmwareupdate der Firmware der Mikroprozessorschaltung 5 des intelligenten Sensors 1. Ein solcher Firmwareupdate wird von dem entfernten Benutzer 10 veranlasst und von dort aus drahtlos über die Kommunikationsschnittstelle 8 der Sensorelektronik 3 aufgespielt. In anderen Worten ist ein Firmwareupdate ein Beispiel für einen Dienst, der von dem entfernten Benutzer 10 an dem intelligenten Sensor 1, dem Gerät, angefragt wird, um in dem Gerät 1 ausgeführt zu werden. Wenn nun die Energiereserven, also die Summe aus der von dem Energy-Harvester 2 erzeugten und der in der wiederaufladbaren Batterie vorhandenen Energie, in dem Gerät nicht ausreichen, um den angefragten Dienst vollständig auszuführen, so kann vor Beendigung des Dienstes, also vor erfolgreicher Installation des Firmwareupdates, die Ausführung des Dienstes in dem Gerät aus Energiemangel abgebrochen werden. Im Beispiel des Firmwareupdates kann das dazu führen, dass der intelligente Sensor 1 den Speicherinhalt seines Firmware-Speichers verliert und damit funktionsuntüchtig wird, so dass er im Zuge einer Reparatur ersetzt werden muss.

Mit dem hier vorgestellten Verfahren wird der Energievorrat in dem Energiespeichereines intelligenten Sensor-Gerätes, das seine Energie aus der Umgebung über einen Energy-Harvester erhält, ermittelt und der Benutzer erhält eine Rückmeldung darüber, welche Funktion oder welcher Dienst mit dem vorhandenen Energievorrat noch ausgeführt werden kann, entweder sofort oder nach einer gewissen Zeit. Die Information über den derzeitigen Energiegehalt in dem Energiespeicher, also in der wiederaufladbaren Batterie, wird zusammen mit der Energiegewinnungs-Historie des Energy-Harvesters dazu verwendet, um dem Benutzer eine Rückmeldung zu geben, welche Funktion bzw. welcher Dienst zu welchem Zeitpunkt, sofort oder zu einem Zeitpunkt in der Zukunft, der anhand der vorhandenen Informationen ermittelbar ist, ausgeführt werden kann. Wenn die Funktion oder der Dienst zum aktuellen Zeitpunkt nicht ausgeführt werden kann, weil der aktuelle Energievorrat in dem intelligenten Sensor zu gering dafür ist, so wird anhand der Energiegewinnungs-Historie des Energy-Harvesters ein Zeitpunkt in der Zukunft ermittelt, zu dem voraussichtlich der Energy-Harvester die wiederaufladbare Batterie wieder soweit aufgeladen haben wird, dass die Funktion bzw. der gewählte Dienst dann energietechnisch ausgeführt werden können. Das Verfahren erlaubt es auch, dem entfernten Benutzer Vorschläge zu machen, ob ggf. ein anderer Dienst oder eine andere Funktion, der oder die weniger Energie benötigen zu ihrer Ausführung, ausführbar ist mit dem zur Verfügung stehenden Energievorrat. Der entfernte Benutzer kann dann entscheiden, ob er ggf. die alternative Funktion bzw. den alternativen Dienst zur Ausführung anfragt anstelle des ursprünglich geplanten Dienstes, für den nicht genügend Energie zur Verfügung steht.

In einem ersten Verfahrensschritt a werden dabei Erfahrungswerte ermittelt für die Menge der zur Ausführung bestimmter Dienste in dem Gerät benötigten Energie. Das kann anhand von Modellen für den Energieverbrauch des jeweiligen Dienstes geschehen. Ein solcher Dienst kann beispielsweise ein drahtlos übermitteltes und ausgeführtes Firmware-Update sein, bei dem die neuen Firmware-Daten dem intelligenten Sensor 1 vom entfernten Benutzer 10 her dem Intelligenten Sensor über Funk bzw. Radiowellen übermittelt werden. Es kann auch eine reguläre Übermittlung von Messwerten des Sensors sein, die mit unterschiedlichen Aktualisierungs-Intervallen vom entfernten Benutzer angefragt werden. Die benutzten Modelle treffen eine Vorhersage über den Abfluss von Energie aus der wiederaufladbaren Batterie für die jeweilige angefragte Funktion bzw. den jeweils angefragten Dienst. Zusammen mit der Information über den aktuell vorhandenen Energievorrat in der wiederaufladbaren Batterie, und unter Berücksichtigung von Umgebungsbedingungen, die die Energiegewinnung mit dem Energy-Harvester beeinflussen, also z.B. Helligkeit, Temperatur, Feuchtigkeit etc., trifft das Modell eine Vorhersage, ob eine bestimmte Funktion oder ein bestimmter Dienst energietechnisch ausgeführt werden kann oder nicht. Die Modellierung kann dabei in dem Gerät selbst, also in dem intelligenten Sensor 1, etwa als ein Teil des Arbeitsprogramms seines Mikroprozessors, ausgeführt werden.

Die in Schritt a ermittelten Erfahrungswerte werden in einem folgenden Schritt b in dem Gerät hinterlegt, beispielsweise in einem Speicher 11 in dem intelligenten Sensor 1.

Wenn jetzt in einem folgenden Schritt c ein bestimmter Dienst durch den entfernten Benutzer 10 bei dem Gerät 1, dem intelligenten Sensor 1, also beispielsweise die Ausführung eines Firmware-updates, angefragt wird, so wird in dem folgenden Schritt d die in dem Gerät 1 zur Ausführung von Diensten verfügbare Energiemenge ermittelt. Die in der wiederaufladbaren Batterie 6 verfügbare Energie kann dabei entweder unter Verwendung eines Messwertes der Batteriespannung oder des Batteriestromes ermittelt werden. Daneben enthält der intelligente Sensor 1 noch Sensorelemente zur Erfassung der Temperatur. Der Temperaturmesswert wird mit verarbeitet zur Bestimmung der verbleibenden Kapazität der wiederaufladbaren Batterie, denn die Kapazität einer Batterie ist bekanntermaßen stark temperaturabhängig.

Neben einer Kenntnis der aktuell zum Zeitpunkt der Anforderung des Dienstes verfügbaren Energiemenge ist es auch interessant, einen Vorhersagewert darüber zu haben, welche Energiemenge mit dem Energy-Harvester in naher Zukunft voraussichtlich gewonnen werden wird, die dann in dieser nahen Zukunft zur Ausführung des angefragten Dienstes verfügbar sein wird, und auch eine Vorhersage darüber, wann dieser Zeitpunkt erreicht sein wird. Das Energiegewinnungsverhalten des Energy-Harvesters wird dazu aufgezeichnet, und aus dem zeitlichen Verlauf der Energiegewinnung in der Vergangenheit, ggf. unter Berücksichtigung von Informationen über die Energiegewinnung beeinflussende Umgebungsbedingungen wie den zeitlichen Verlauf von Temperatur, Helligkeit, Feuchte etc, ermittelt durch zusätzliche Sensorelemente in dem intelligenten Sensor 1, wird, ggf. unter weiterer Berücksichtigung des Energieverbrauchsprofils des Gerätes, also des intelligenten Sensors, ermittelt, zu welchem Zeitpunkt die wiederaufladbare Batterie wieder so weit aufgeladen sein wird, dass der angefragte Dienst ausführbar ist.

Verfeinert und verbessert werden kann dieses Vorhersagemodell durch Anwendung von Lernalgorithmen, die anhand vergangener Ereignisse, wie beispielsweise zurückliegender Ausführungen der angefragten Dienste, lernen und die Vorhersage zukünftiger Ereignisse verbessern helfen. Dabei kann die Lernfunktion unterstützt werden durch Informationen, die an anderen intelligenten Sensoren, die mit dem jeweiligen Sensor in einem Sensornetzwerk verbunden sind, erhalten wurden und die dem jeweiligen Sensor über das Netzwerk, beispielsweise über das Netzwerk-Gateway, zur Verfügung gestellt werden. So können beispielsweise bezüglich eines durchzuführenden Firmware-Updates als angefragter Dienst Informationen und Erfahrungswerte von an den anderen Sensoren bereits früher durchgeführten Firmware-Updates demjenigen Sensor, bei dem aktuell die Durchführung eines Firmware-Updates angefragt ist, zur Verfügung gestellt werden.

In einem nachfolgenden Schritt e wird der Erfahrungswert für die Menge der zur Ausführung des angefragten Dienstes benötigten Energie mit der zur Ausführung von Diensten in dem Gerät verfügbaren Energiemenge verglichen.

Wenn der Erfahrungswert für die Menge der zur Ausführung des angefragten Dienstes benötigten Energie kleiner ist als die zur Ausführung von Diensten in dem Gerät verfügbare Energiemenge, so wird in einem folgenden Schritt f dieser Dienst ausgeführt, also beispielsweise das Firmware-Update drahtlos durchgeführt.

Wenn der Erfahrungswert für die Menge der zur Ausführung des angefragten Dienstes benötigten Energie größer ist als die zur Ausführung von Diensten in dem Gerät verfügbare Energiemenge, so wird in einem nachfolgenden Schritt g die Ausführung des Dienstes abgelehnt. Gegebenenfalls wird ein Vorhersagewert abgefragt, zu welchem Zeitpunkt in der Zukunft die Ausführung des angefragten Dienstes energietechnisch voraussichtlich möglich sein wird, und der Dienst wird dann zu diesem Zeitpunkt erneut angefragt.

Das Gerät 1 kann signaltechnisch mit wenigstens einer Einrichtung verbunden sein, die mit der Vorrichtung zur Energiegewinnung aus der Umgebung, mit dem Energy-Harvester, zusammenwirkt zu einer Steigerung der Energiegewinnung, und dass, wenn der Erfahrungswert für die Menge der zur Ausführung des angefragten Dienstes benötigten Energie größer ist als die zur Ausführung von Diensten in dem Gerät verfügbare Energiemenge, das Gerät mit der Einrichtung zusammenwirkt zu einer Steigerung der Energiegewinnung. Lediglich exemplarisch und beispielhaft sei angenommen, dass der Energy-Harvester eine Photovoltaik-Zelle ist und der intelligente Sensor 1 ein Sensorelement zur Helligkeitserfassung in der Umgebung der Photovoltaik-Zelle hat. Wenn dann dieser Helligkeitssensor signalisiert, dass es in der Umgebung zu dunkel ist, um genügend Energie mit der Photovoltaik-Zelle zum Aufladen der wiederaufladbaren Batterie 6 zu erzeugen, so kann der intelligente Sensor 1 über das Gebäudeautomatisierungssystem, in das er eingebunden ist, ein Einschalten der Raumbeleuchtung in dem Raum, in dem sich der Sensor befindet, veranlassen, so dass dann die Photovoltaik-Zelle mithilfe der Raumbeleuchtung wieder genügend Energie zum zügigen Aufladen der wiederaufladbaren Batterie bereitstellen kann.

### Bezugszeichenliste

| | |
|---|---|
| 1 | Intelligenter Sensor |
| 2 | Photovoltaik-Zelle |
| 3 | Sensorelektronik |
| 4 | Ladekontroll- und Regelelektronik |
| 5 | Mikroprozessorschaltung |
| 6 | wiederaufladbare Batterie |
| 7 | Kommunikationsschnittstelle |
| 8 | Antenne |
| 9 | Radiowellen |
| 10 | Benutzer |
| 11 | Speicher |

## Patentansprüche

1. Verfahren zur Sicherstellung der Verfügbarkeit ausreichender Energiereserven in einem intelligenten Gerät (1) zur Ausführung eines von einem entfernten Benutzer (10) bei dem Gerät (1) angefragten Dienstes, wobei das Gerät (1) eine Vorrichtung (2) zur Energiegewinnung aus der Umgebung des Gerätes (1) hat und einen mit der Vorrichtung (2) verbundenen wiederaufladbaren Energiespeicher (6), umfassend die folgenden Schritte:
a. Ermitteln von Erfahrungswerten für die Menge der zur Ausführung bestimmter Dienste in dem Gerät (1) benötigten Energie,
b. Hinterlegen der Erfahrungswerte in dem Gerät (1),
c. Anfragen eines bestimmten Dienstes durch den Benutzer bei dem Gerät (1).
d. Ermitteln der in dem Gerät (1) zur Ausführung von Diensten verfügbaren Energiemenge,
e. Vergleichen des Erfahrungswertes für die Menge der zur Ausführung des angefragten Dienstes benötigten Energie mit der zur Ausführung von Diensten in dem Gerät (1) verfügbaren Energiemenge,
f. Ausführen des Dienstes wenn der Erfahrungswert für die Menge der zur Ausführung des angefragten Dienstes benötigten Energie kleiner ist als die zur Ausführung von Diensten in dem Gerät (1) verfügbare Energiemenge,
g. Ablehnen der Ausführung des Dienstes, wenn der Erfahrungswert für die Menge der zur Ausführung des angefragten Dienstes benötigten Energie größer ist als die zur Ausführung von Diensten in dem Gerät (1) verfügbare Energiemenge,
**dadurch gekennzeichnet, dass**
- das Gerät (1) ein Sensor ist, der in ein Gebäudeautomatisierungssystem eingebunden ist, und dass
- der Benutzer (10) ein Gateway in einem Gebäudeautomatisierungssystem, ein I/O-Gerät in einem Gebäudeautomatisierungssystem oder ein mobiles Kommunikationsgerät ist.

2. Verfahren nach Anspruch 1, **dadurch gekennzeichnet, dass** das Gerät (1) einen Mikroprozessor (5) und einen Datenspeicher (11) hat, und dass der Energiespeicher (6) eine wiederaufladbare Batterie ist, und dass die Erfahrungswerte im Datenspeicher (11) hinterlegt werden.

3. Verfahren nach Anspruch 1, **dadurch gekennzeichnet, dass** die in der Vorrichtung (2) zur Energiegewinnung erzeugte Energie zum Betrieb des Gerätes (1) und zum Aufladen der wiederaufladbaren Batterie verwendet wird.

4. Verfahren nach Anspruch 3, **dadurch gekennzeichnet, dass** die Verlaufshistorie der in der Vorrichtung (2) zur Energieerzeugung erzeugten Energiemenge aufgezeichnet wird und anhand der Verlaufshistorie eine Prognose für die Menge der zukünftig erzeugbaren Energiemenge erstellt wird.

5. Verfahren nach Anspruch 4, **dadurch gekennzeichnet, dass** die im Energiespeicher (6) verfügbare Energiemenge anhand einer Messung der Batteriespannung oder des Batteriestromes ermittelt wird.

6. Verfahren nach Anspruch 5, **dadurch gekennzeichnet, dass** die in dem Gerät (1) zur Ausführung von Diensten verfügbare Energiemenge anhand der im Energiespeicher (6) verfügbaren Energie und der Prognose für die zukünftig in der Vorrichtung (2) erzeugbare Energiemenge ermittelt wird.

7. Verfahren nach Anspruch 6, **dadurch gekennzeichnet, dass** die Erfahrungswerte für die Menge der zur Ausführung bestimmter Dienste in dem Gerät (1) benötigten Energie durch Modellierung der jeweiligen Dienste erhalten werden.

8. Verfahren nach Anspruch 6, **dadurch gekennzeichnet, dass** die Erfahrungswerte für die Menge der zur Ausführung bestimmter Dienste in dem Gerät (1) benötigten Energie mithilfe von Lernalgorithmen anhand des Energieverbrauchs bei vorhergehenden Ausführungen der jeweiligen Dienste ermittelt werden.

9. Verfahren nach einem der vorigen Ansprüche, **dadurch gekennzeichnet, dass** das Gerät (1) signaltechnisch mit wenigstens einer Einrichtung verbunden ist, die mit der Vorrichtung (2) zur Energiegewinnung aus der Umgebung zusammenwirkt zu einer Steigerung der Energiegewinnung, und dass, wenn der Erfahrungswert für die Menge der zur Ausführung des angefragten Dienstes benötigten Energie größer ist als die zur Ausführung von Diensten in dem Gerät (1) verfügbare Energiemenge, das Gerät (1) mit der Einrichtung zusammenwirkt zu einer Steigerung der Energiegewinnung.

## Claims

1. Method for ensuring the availability of sufficient energy reserves in an intelligent device (1) for performing a service requested from the device (1) by a remote user (10), wherein the device (1) has an apparatus (2) for generating energy from the environment of the device (1) and a rechargeable energy store (6) connected to the apparatus (2), comprising the following steps of:
a. determining empirical values for the amount of energy needed to perform certain services in the device (1),
b. storing the empirical values in the device (1),
c. requesting a certain service from the device (1) by the user,
d. determining the amount of energy available in the device (1) for performing services,
e. comparing the empirical value for the amount of energy needed to perform the requested service with the amount of energy available for performing services in the device (1),
f. performing the service if the empirical value for the amount of energy needed to perform the requested service is less than the amount of energy available for performing services in the device (1),
g. declining the performance of the service if the empirical value for the amount of energy needed to perform the requested service is greater than the amount of energy available for performing services in the device (1),
**characterized in that**
- the device (1) is a sensor which is incorporated in a building automation system, and **in that**
- the user (10) is a gateway in a building automation system, an I/O device in a building automation system or a mobile communication device.

2. Method according to Claim 1, **characterized in that** the device (1) has a microprocessor (5) and a data memory (11), and **in that** the energy store (6) is a rechargeable battery, and **in that** the empirical values are stored in the data memory (11).

3. Method according to Claim 1, **characterized in that** the energy generated in the apparatus (2) for generating energy is used to operate the device (1) and to charge the rechargeable battery.

4. Method according to Claim 3, **characterized in that** the profile history of the amount of energy generated in the apparatus (2) for generating energy is recorded and a prediction of the amount of energy which can be generated in future is created on the basis of the profile history.

5. Method according to Claim 4, **characterized in that** the amount of energy available in the energy store (6) is determined by measuring the battery voltage or the battery current.

6. Method according to Claim 5, **characterized in that** the amount of energy available in the device (1) for performing services is determined on the basis of the energy available in the energy store (6) and the prediction of the amount of energy which can be generated in future in the apparatus (2).

7. Method according to Claim 6, **characterized in that** the empirical values for the amount of energy needed to perform certain services in the device (1) are obtained by modelling the respective services.

8. Method according to Claim 6, **characterized in that** the empirical values for the amount of energy needed to perform certain services in the device (1) are determined with the aid of learning algorithms on the basis of the energy consumption during previous operations of performing the respective services.

9. Method according to one of the preceding claims, **characterized in that** the device (1) is connected using signalling to at least one item of equipment which interacts with the apparatus (2) for generating energy from the environment in order to increase the generation of energy, and **in that**, if the empirical value for the amount of energy needed to perform the requested service is greater than the amount of energy available for performing services in the device (1), the device (1) interacts with the item of equipment in order to increase the generation of energy.

## Revendications

1. Procédé pour garantir la disponibilité de réserves d'énergie suffisantes dans un appareil intelligent (1) en vue d'accomplir un service demandé auprès de l'appareil (1) par un utilisateur distant (10), l'appareil (1) comprenant un arrangement (2) de production d'énergie à partir de l'environnement de l'appareil (1) et un accumulateur d'énergie (6) rechargeable relié à l'arrangement (2), comprenant les étapes suivantes :
a. détermination de valeurs empiriques pour la quantité d'énergie nécessaire à l'accomplissement de certains services dans l'appareil (1),
b. stockage des valeurs empiriques dans l'appareil (1),
c. sollicitation d'un service donné par l'utilisateur auprès de l'appareil (1),
d. détermination de l'énergie disponible dans l'appareil (1) pour l'accomplissement de services,
e. comparaison de la valeur empirique pour la quantité d'énergie nécessaire à l'accomplissement du service demandé avec la quantité d'énergie disponible dans l'appareil (1) pour l'accomplissement de services,
f. accomplissement du service lorsque la valeur empirique pour la quantité d'énergie nécessaire à l'accomplissement du service demandé est inférieure à la quantité d'énergie disponible dans l'appareil (1) pour l'accomplissement de services,
g. refus de l'accomplissement du service lorsque la valeur empirique pour la quantité d'énergie nécessaire à l'accomplissement du service demandé est supérieure à la quantité d'énergie disponible dans l'appareil (1) pour l'accomplissement de services,
**caractérisé en ce que**
- l'appareil (1) est un capteur qui est intégré dans un système d'automatisation de bâtiment, et **en ce que**
- l'utilisateur (10) est une passerelle dans un système d'automatisation de bâtiment, un appareil d'E/S dans un système d'automatisation de bâtiment ou un appareil de communication mobile.

2. Procédé selon la revendication 1, **caractérisé en ce que** l'appareil (1) comprend un microprocesseur (5) et une mémoire de données (11), et **en ce que** l'accumulateur d'énergie (6) est une batterie rechargeable, et **en ce que** les valeurs empiriques sont stockées dans la mémoire de données (11).

3. Procédé selon la revendication 1, **caractérisé en ce que** l'énergie générée dans l'arrangement (2) de production d'énergie est utilisée pour faire fonctionner l'appareil (1) et pour charger la batterie rechargeable.

4. Procédé selon la revendication 3, **caractérisé en ce que** l'historique du tracé de la quantité d'énergie générée dans l'arrangement (2) de production d'énergie est enregistré et un pronostic de la quantité d'énergie pouvant être générée dans l'avenir est établi à l'aide de l'historique du tracé.

5. Procédé selon la revendication 4, **caractérisé en ce que** la quantité d'énergie disponible dans l'accumulateur d'énergie (6) est déterminée à l'aide d'une mesure de la tension de batterie ou du courant de batterie.

6. Procédé selon la revendication 5, **caractérisé en ce que** la quantité d'énergie disponible dans l'appareil (1) pour l'accomplissement de services est déterminée à l'aide de l'énergie disponible dans l'accumulateur d'énergie (6) et du pronostic de la quantité d'énergie pouvant être générée dans l'avenir dans l'arrangement (2).

7. Procédé selon la revendication 6, **caractérisé en ce que** les valeurs empiriques pour la quantité d'énergie nécessaire à l'accomplissement de certains services dans l'appareil (1) sont obtenues par modélisation des services respectifs.

8. Procédé selon la revendication 6, **caractérisé en ce que** les valeurs empiriques pour la quantité d'énergie nécessaire à l'accomplissement de certains services dans l'appareil (1) sont obtenues à l'aide d'algorithmes d'apprentissage au moyen de la consommation d'énergie lors des accomplissements précédents des services respectifs.

9. Procédé selon l'une des revendications précédentes, **caractérisé en ce que** l'appareil (1) est relié signalétiquement à au moins un dispositif, lequel coopère avec l'arrangement (2) de production d'énergie à partir de l'environnement en vue d'une augmentation de la production d'énergie, et **en ce que** lorsque la valeur empirique pour la quantité d'énergie nécessaire à l'accomplissement du service demandé est supérieure à la quantité d'énergie disponible dans l'appareil (1) pour l'accomplissement de services, l'appareil (1) coopère avec le dispositif en vue d'une augmentation de la production d'énergie.
